# EUROPÄISCHE PATENTANMELDUNG

(11) **EP 3 766 621 A1**
(43) Veröffentlichungstag der Anmeldung: **20.01.2021**
(21) Anmeldenummer: 19186250.7
(22) Anmeldetag: 15.07.2019
(51) Int. Cl.: B23K 11/11, B23K 11/30, B23K 11/31, B23P 19/02, B25B 27/02

(54) **VORRICHTUNG ZUM ABDREHEN UND ABSTREIFEN EINER ELEKTRODENKAPPE VON EINER ELEKTRODENKAPPEN-AUFNAHME UND ABSTREIFVORRICHTUNG**

(71) Anmelder: Lutz Precision, K.S., 84104 Bratislava (SK)
(72) Erfinder: FAHNENSTICH, Stefan, 7122 Gols (AT)
(74) Vertreter: Grünecker Patent- und Rechtsanwälte PartG mbB

(57) **Zusammenfassung**

Die Erfindung betrifft eine Vorrichtung (1) zum Abdrehen und Abstreifen einer Elektrodenkappe (15) von einer Elektrodenkappen-Aufnahme eines Endes einer Schweißzange eines Schweißroboters, wobei die Vorrichtung eine Kappenabdreheinheit (2) und weiter eine Abstreifvorrichtung (3) umfasst. Die Abstreifvorrichtung ist entlang eines Einbringwegs für eine Elektrodenkappen-Aufnahme mit einer Elektrodenkappe gesehen vor der Kappenabdreheinheit und entlang eines Ausbringwegs für eine Elektrodenkappen-Aufnahme ohne oder mit Elektrodenkappe gesehen nach der Kappenabdreheinheit angeordnet ist. Weiter betrifft die Erfindung die Abstreifvorrichtung zur Verwendung in Kombination mit einer Kappenabdreheinheit.

## Beschreibung

Die Erfindung betrifft eine Vorrichtung zum Abdrehen und Abstreifen einer Elektrodenkappe von einer Elektrodenkappen-Aufnahme gemäß dem Oberbegriff des Anspruch 1 und eine Abstreifvorrichtung gemäß Anspruch 9.

### Stand der Technik

Schweißroboter haben einen computergesteuerten Roboterarm mit einer Punktschweißzange, die an den einander gegenüberliegenden Zangenenden je eine Elektrodenkappen-Aufnahme aufweist, auf die jeweils eine Elektrodenkappe aufsteckbar ist. Zur selbstständigen Fixierung der Elektrodenkappen sind die Elektrodenkappen-Aufnahmen der Schweißzangen üblicherweise zu ihrem freien Ende hin verjüngt ausgebildet (Haltekonus), so dass eine aufgesetzte Elektrodenkappe unter federnder Wirkung durch die Presskraft der Schweißzange oder mittels eines vorbestimmten Anpressdrucks auf der Aufnahme fixiert werden kann.

Zum Wechseln der Elektrodenkappen sind Kappenwechsler in Roboterschweißanlagen im Einsatz, mit denen die Schweißkappen von einer als Haltekonus ausgebildeten Elektrodenkappenhalterung gelöst werden können. Dazu kann eine Elektrodenkappe von der Aufnahme durch eine Drehbewegung automatisiert gelöst werden. Beispielsweise kann ein Stirnrad vorgesehen sein, in dessen zentrale Öffnung eine Elektrodenkappe einbringbar ist. Auf einem Kreis um die Achse des Stirnrads können auf beidseitig vorstehenden Zapfen drei Spannbacken in gleichen Winkelabständen voneinander schwenkbar gelagert sein. Jede Spannbacke ist mit einer Zugfeder in Richtung auf die Elektrodenkappe belastet, so dass bei Drehung des Stirnrads in der einen Richtung die Zugfedern die Spannbacken gegen die Elektrodenkappe ziehen und diese von der Schweißzange abgezogen werden kann. Erst wenn das Stirnrad nach Entfernen der Schweißzange aus dem Kappenwechsler in die andere Richtung gedreht wird, wird im Allgemeinen die Elektrodenkappe freigegeben.

Hin und wieder tritt - in nicht vorhersehbaren Abständen - das Problem auf, dass nach dem Abdrehen der Elektrodenkappe von der Schweißzange die Elektrodenkappe nicht von den Spannbacken sicher gehalten wird, so dass die Elektrodenkappe beim Entfernen der Schweißzange fallengelassen wird und nach unten wieder auf die Schweißzange zurückrutscht und auf der Schweißzange verbleibt. Dies führt im Allgemeinen zu einem Not-Stopp und einem Stopp der ganzen Linie. Die fallengelassene Elektrodenkappe muss erst entfernt werden, bevor die Linie wieder anfahren kann.

### Aufgabe

Die zu lösende technische Aufgabe darin, eine Vorrichtung zum Abdrehen und Abstreifen einer Elektrodenkappe von einer Elektrodenkappen-Aufnahme und eine Abstreifvorrichtung zur Verwendung in Kombination mit einer Kappenabdreheinheit anzugeben, mit denen ein Zurückrutschen und Verbleiben einer abgedrehten Elektrodenkappe auf einer Elektrodenkappen-Aufnahme verhindert wird.

### Lösung

Diese Aufgabe wird erfindungsgemäß durch die Vorrichtung nach Anspruch 1 und die Abstreifvorrichtung nach Anspruch 9 gelöst. Weitere Ausführungsformen und Weiterbildungen werden von den abhängigen Ansprüchen erfasst.

Die erfindungsgemäße Vorrichtung zum Abdrehen und Abstreifen einer Elektrodenkappe von einer Elektrodenkappen-Aufnahme eines Endes einer Schweißzange eines Schweißroboters, umfasst eine Kappenabdreheinheit. Weiter umfasst die Vorrichtung eine Abstreifvorrichtung, die entlang eines Einbringwegs für eine Elektrodenkappen-Aufnahme mit Elektrodenkappe gesehen vor der Kappenabdreheinheit und entlang eines Ausbringwegs für eine Elektrodenkappen-Aufnahme ohne oder mit Elektrodenkappe gesehen nach der Kappenabdreheinheit angeordnet ist.

Die Abstreifvorrichtung kann vorgesehen sein, um eine nach dem Abdrehen von einer Elektrodenkappen-Aufnahme durch die Kappenabdreheinheit fallengelassene und wieder auf die Elektrodenkappen-Aufnahme zurückgefallene Elektrodenkappe von der Elektrodenkappen-Aufnahme abzustreifen, so dass beim Bewegen der Elektrodenkappen-Aufnahme entlang des Ausbringwegs ein Verbleiben der Elektrodenkappe auf der Elektrodenkappen-Aufnahme vermieden wird, wenn die Elektrodenkappe durch die Kappenabdreheinheit fallengelassen wurde.

Die Kappenabdreheinheit kann vorgesehen und ausgebildet sein, zumindest teilweise an einem Umfangsbereich einer zumindest teilweise in die Kappenabdreheinheit eingebrachte Elektrodenkappe anzugreifen und durch eine spannungskraftschlüssige Drehung in eine erste Drehrichtung die zumindest teilweise in die Kappenabdreheinheit eingebrachte Elektrodenkappe spannungskraftschlüssig zu greifen, zu halten und abzudrehen. Die Abstreifvorrichtung kann derart angeordnet und ausgebildet sein, dass bei einer zum Abdrehen einer Elektrodenkappe zumindest teilweise in die Kappenabdreheinheit eingebrachte Elektrodenkappe die Abstreifvorrichtung die Elektrodenkappen-Aufnahme mit mindestens einer schräg angeordneten Lippe die Elektrodenkappen-Aufnahme zumindest teilweise umgibt, so dass verhindert wird, dass während die Elektrodenkappen-Aufnahme entlang des Ausbringwegs aus der Kappenabdreheinheit bewegt wird, ein Verbleiben der Elektrodenkappe auf der Elektrodenkappen-Aufnahme auftritt, wenn die Elektrodenkappe durch die Kappenabdreheinheit fallengelassen wird.

Durch die Schräge, die sich wegen der mindestens einen schräg angeordneten Lippe ergibt, kann eine durch die Kappenabdreheinheit fallengelassene und durch die Abstreifvorrichtung abgestreifte Elektrodenkappe automatisch durch die einwirkende Schwerkraft abgeführt werden. Die Richtung der Schwerkraft kann beispielsweise in Richtung des Ausbringwegs verlaufen. Die Schräge kann bezüglich der Richtung der Schwerkraft ausgebildet sein. Ein Steigungswinkel der mindestens einen Lippe kann zwischen einer Unterseite der mindestens einen Lippe, die von der Kappenabdreheinheit abgewandt ist, und einer zu der Richtung der Schwerkraft und/oder zu dem Ausbringweg senkrechten Ebene ermittelt werden.

In der Vorrichtung zum Abdrehen und Abstreifen einer Elektrodenkappe von einer Elektrodenkappen-Aufnahme eines Endes einer Schweißzange eines Schweißroboters kann somit die Abstreifvorrichtung unterhalb, beispielsweise senkrecht unterhalb, der Kappenabdreheinheit angeordnet sein.

Beispielsweise können die Mittelachse eines Stirnrads der Kappenabdreheinheit, in das eine abzudrehende Elektrodenkappe zumindest teilweise einbringbar ist, und eine Achse der Abstreifvorrichtung derart ausgerichtet sein, dass die Richtung des Ausbringwegs bzw. die Richtung des Einbringwegs entlang der Mittelachse des Stirnrads verlaufen.

Die Abstreifvorrichtung kann zwei Lippen umfassen, die gleichermaßen schräg angeordnet sein können, wobei die Elektrodenkappen-Aufnahme mit einer Elektrodenkappe zwischen den beiden Lippen hindurchbewegbar und die Elektrodenkappen-Aufnahme ohne die Elektrodenkappe zwischen den beiden Lippen herausbewegbar sein kann. Durch das Vorsehen von zwei Lippen kann ein gerichtetes Abführen der abgestreiften Elektrodenkappe erfolgen.

Die Abstreifvorrichtung kann eine Einfassung umfassen, die derart um die mindestens eine Lippe angeordnet sein kann, dass ein Ausleitungsweg für die abgedrehte und fallengelassene Elektrodenkappe ausgebildet sein kann. Die mindestens eine Lippe kann an der Einfassung angeordnet werden. Mittels der Einfassung kann die Abstreifvorrichtung an einer Struktur der Vorrichtung zum Abdrehen und Abstreifen einer Elektrodenkappe von einer Elektrodenkappen-Aufnahme eines Endes einer Schweißzange eines Schweißroboters angeordnet werden.

Die Einfassung kann zwei Seitenwände, einen Querbalken und eine Endwand umfassen. An den Seitenwänden kann die mindestens eine Lippe angeordnet werden. Der Querbalken kann eine zusätzliche Stabilität verleihen. Die Endwand kann am Ende der Schräge vorgesehen sein, so dass durch die Endwand eine die Schräge herunterrutschende oder herunterrollende Elektrodenkappe durch die Endwand gestoppt oder gebremst werden kann.

Die Einfassung kann in einem unteren Bereich der mindestens einen Lippe eine Öffnung aufweisen, durch die die abgedrehte und fallengelassene Elektrodenkappe ausbringbar sein kann. Die Öffnung kann zwischen der Endwand und der mindestens eine Lippe vorgesehen sein, so dass eine fallengelassene Elektrodenkappe die schräg angeordnete Lippe(n) herunterrutschen oder herunterrollen kann und dabei durch die Endwand gestoppt oder gebremst werden kann und in die Öffnung gelangen kann.

Die mindestens eine Lippe oder alle Lippen können als Bürste oder als Gummilippe ausgebildet sein. Um eine fallengelassene Elektrodenkappe zurückhalten zu können, ist eine gewisse Steifigkeit der jeweiligen Materialien erforderlich, wobei die Materialien aber nicht die Oberfläche der Elektrodenkappen-Aufnahme beschädigen sollten.

Ein Steigungswinkel der mindestens einen Lippe kann in einem Bereich von 20° bis 50° liegen. Der Steigungswinkel kann zwischen einer Unterseite der mindestens einen Lippe, die von der Kappenabdreheinheit abgewandt ist, und einer zu dem Ausbringweg senkrechten Ebene ermittelt werden. Durch den Steigungswinkel der zwei Lippen können fallengelassene Elektrodenkappen automatisch durch die einwirkende Schwerkraft abgeführt werden.

Ein Winkel zwischen einer Oberfläche der mindestens einen Lippe, die der Kappenabdreheinheit zugewandt ist, und der Endwand kann in einem Bereich von 40° bis 70° liegen.

Die erfindungsgemäße Abstreifvorrichtung zur Verwendung in Kombination mit einer Kappenabdreheinheit umfasst mindestens eine schräg angeordnete Lippe. Die Abstreifvorrichtung kann die Abstreifvorrichtung sein, die weiter oben im Zusammenhang mit der Vorrichtung zum Abdrehen und Abstreifen einer Elektrodenkappe von einer Elektrodenkappen-Aufnahme eines Endes einer Schweißzange eines Schweißroboters beschrieben wurde oder eine Abstreifvorrichtung, die weiter unten beschrieben wird.

Die Abstreifvorrichtung kann zwei Lippen, die gleichermaßen schräg angeordnet sein können, umfassen.

Die Abstreifvorrichtung kann weiter eine Einfassung umfassen, die derart um die mindestens eine Lippe angeordnet sein kann, dass ein Ausleitungsweg für eine abgedrehte und fallengelassene Elektrodenkappe ausgebildet sein kann.

Die Einfassung kann zwei Seitenwände, einen Querbalken und eine Endwand umfassen.

Die Einfassung kann in einem unteren Bereich der mindestens einen Lippe eine Öffnung aufweisen, durch die eine abgedrehte und fallengelassene Elektrodenkappe ausgebringbar sein kann.

Die mindestens eine Lippe oder alle Lippen können als Bürste oder als Gummilippe ausgebildet sein.

Ein Steigungswinkel der mindestens einen Lippe kann in einem Bereich von 20° bis 50° liegen.

Ein Winkel zwischen einer Oberfläche der mindestens einen Lippe, die einer Kappenabdreheinheit zugewandt ist, und der Endwand kann in einem Bereich von 40° bis 70° liegen.

### Figurenbeschreibung

Die beigefügten Figuren stellen beispielhaft zum besseren Verständnis und zur Veranschaulichung Aspekte und Ausführungsformen der Erfindung dar. Es zeigt:
Figur 1 eine schematische Schrägansicht von oben auf eine Vorrichtung 1 zum Abdrehen und Abstreifen einer Elektrodenkappe von einer Elektrodenkappen-Aufnahme eines Endes einer Schweißzange eines Schweißroboters,
Figur 2 eine Frontansicht der Abstreifvorrichtung auf die Endwand,
Figur 3 eine schematische seitliche Schnittansicht entlang A-A aus der Figur 2,
Figur 4 eine Draufsicht auf die Abstreifvorrichtung und
es zeigen:
Figuren 5A bis 5E schematische Darstellungen eines Abziehvorgangs einer Elektrodenkappe von der Elektrodenkappen-Aufnahme mittels der Abstreifvorrichtung.

### Ausführliche Beschreibung

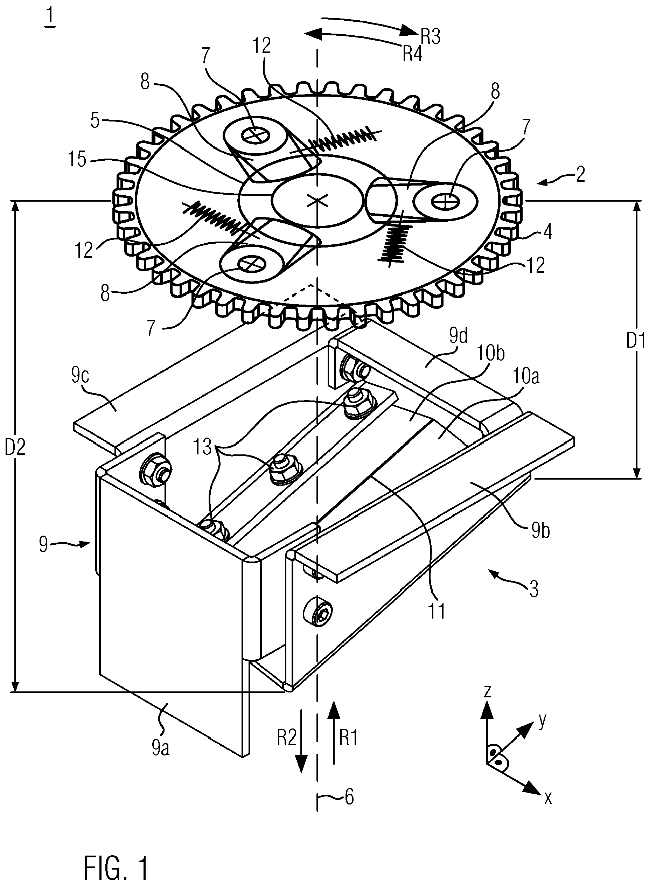

Die Figur 1 zeigt eine schematische Schrägansicht von oben auf eine Vorrichtung 1 zum Abdrehen und Abstreifen einer Elektrodenkappe 15 von einer Elektrodenkappen-Aufnahme eines Endes einer Schweißzange eines Schweißroboters. Zu sehen ist ein Teil einer Kappenabdreheinheit 2 und eine darunter angeordnete Abstreifvorrichtung 3. Die Kappenabdreheinheit 2 und die Abstreifvorrichtung 3 sind an nicht dargestellten Haltestrukturen der Vorrichtung 1 angeordnet.

Die Kappenabdreheinheit 2 umfasst in einem Stirnrad 4 eine zentrale Öffnung 5, in die eine Elektrodenkappen-Aufnahme mit einer Elektrodenkappe 15 von unten her, in einer ersten Richtung R1 entlang eines Einbringwegs, einbringbar ist und die Elektrodenkappen-Aufnahme ohne die Elektrodenkappe nach unten, in einer zweiten Richtung R2 entlang eines Ausbringwegs, ausbringbar ist. Die Richtung der Schwerkraft kann beispielsweise ebenfalls in die zweite Richtung R2 verlaufen.

Auf einem Kreis um eine Mittelachse 6 des Stirnrads 4 sind auf beidseitig vorstehenden Zapfen 7 jeweils drei Spannbacken 8 in gleichen Winkelabständen voneinander schwenkbar gelagert, wobei in Figur 1 die oberen drei Spannbacken 8 zu sehen sind. Der Einbringweg und der Ausbringweg können entlang der Achse 6 verlaufen.

Jede Spannbacke 8 ist mit einer Zugfeder 12 in Richtung auf eine eingebrachte Elektrodenkappe belastet. Schwenkt das Stirnrad 4 im Uhrzeigersinn (Pfeil R3), so ziehen die Zugfedern 12 die Spannbacken 8 gegen eine eingebrachte Elektrodenkappe 15, die damit zunehmend fester erfasst, gehalten und dann von der Elektrodenkappen-Aufnahme abgedreht werden kann. Wird die Elektrodenkappen-Aufnahme dann nach unten in die zweite Richtung R2 entlang des Ausbringwegs aus der Kappenabdreheinheit 2 herausbewegt, so verbleibt die abgedrehte Elektrodenkappe 15 im Allgemeinen zunächst in der Kappenabdreheinheit 2, da sie dort gehalten wird.

Nach dem Herausbewegen der Elektrodenkappen-Aufnahme dreht das Stirnrad 4 entgegen dem Uhrzeigersinn (Pfeil R4), bei Umschalten eines nicht dargestellten Motors, so dass sich die Spannbacken 8 öffnen und die abgedrehte Elektrodenkappe 15 herausfallen und zu einer Abführeinrichtung gelangen kann. Im Anschluss kann eine weitere Elektrodenkappen-Aufnahme mit einer Elektrodenkappe 15 eingebracht in die Öffnung 5 des Stirnrads 2 eingebracht werden.

Da es hin und wieder passieren kann, dass eine Elektrodenkappe 15 nach dem Abdrehen durch die Kappenabdreheinheit 2 nicht gehalten wird und auf die Elektrodenkappen-Aufnahme zurückrutscht, ist unterhalb der Kappenabdreheinheit 2 die Abstreifvorrichtung 3 angeordnet. In der Darstellung umfasst die Abstreifvorrichtung 3 ein Gehäuse 9 mit zwei Seitenwänden 9b, 9c, einem Querbalken 9d und einer Endwand 9a. An den Seitenwänden 9b, 9c sind zwei Lippen 10a, 10b angeordnet, die in einem Kantenbereich 11 aneinander liegen.

Die beiden Lippen 10a, 10b sind jeweils in einem Seitenbereich, der dem Kantenbereich 11 gegenüberliegt mit den Seitenwänden 9b, 9c, hier mittels Schrauben 13 verbunden.

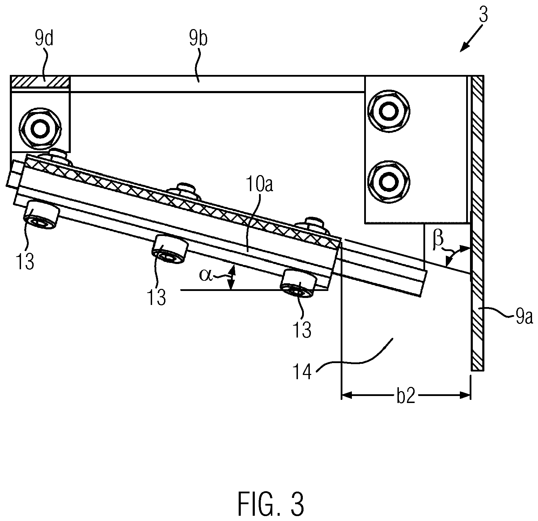

Der Steigungswinkel (siehe auch Figur 3) der beiden Lippen 10a, 10b liegt in einem Bereich von 20° bis 50°. Dieser Steigungswinkel wird durch die Ausbildung der Seitenwände 9b, 9c vorgegeben. Durch den Steigungswinkel kann eine Elektrodenkappe auf der Oberfläche der beiden Lippen 10a, 10b, die der Kappenabdreheinheit 2 zugewandt ist, durch die einwirkende Schwerkraft in Richtung auf die Endwand 9a zu rutschen. Die Richtung der Schwerkraft kann beispielweise in der zweiten Richtung R2 verlaufen.

Wird ein kartesisches Koordinatensystem zu Grunde gelegt, so kann die erste Richtung R1 in eine positive z-Richtung und die zweite Richtung R2 in eine negative z-Richtung verlaufen. Die y-Achse kann senkrecht zu der Endwand 9a und die x-Achse parallel zu der Endwand 9a verlaufen.

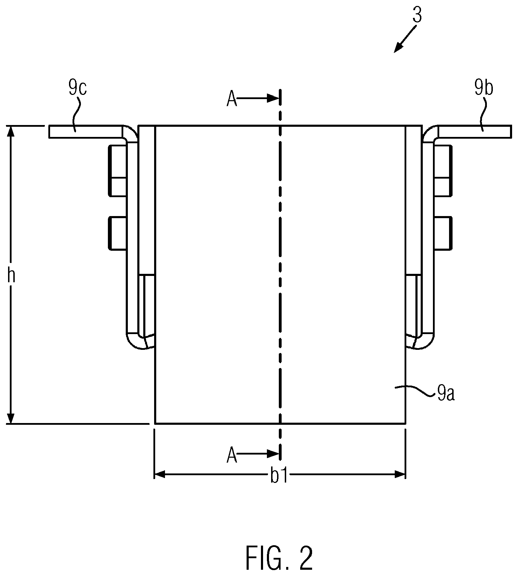

Die Figur 2 zeigt eine Frontansicht der Abstreifvorrichtung 3 auf die Endwand 9a. Die Endwand kann eine Breite b1 in einem Bereich von 45 mm bis 50 mm und eine Höhe h in einem Bereich von 42 mm bis 46 mm aufweisen.

Die Figur 3 zeigt eine schematische seitliche Schnittansicht entlang A-A aus der Figur 2. Unter der Annahme, dass die Endwand 9a parallel zu der Längsachse 6 des Stirnrads 4 verläuft, können der Steigungswinkel α und der Winkel β zwischen einer Oberfläche 14 der zwei Lippen 10a, 10b, die der Kappenabdreheinheit 2 zugewandt ist, und der Endwand 9a, wie dargestellt angegeben werden. Zwischen den beiden Lippen 10a, 10b und der Endwand 9a ist eine Öffnung 14 vorgesehen, durch die die fallengelassenen und abgestreiften Elektrodenkappen ausgeleitet werden können. Durch den Steigungswinkel α der zwei Lippen 10a, 10b werden die fallengelassenen und abgestreiften Elektrodenkappen automatisch durch die einwirkende Schwerkraft abgeführt.

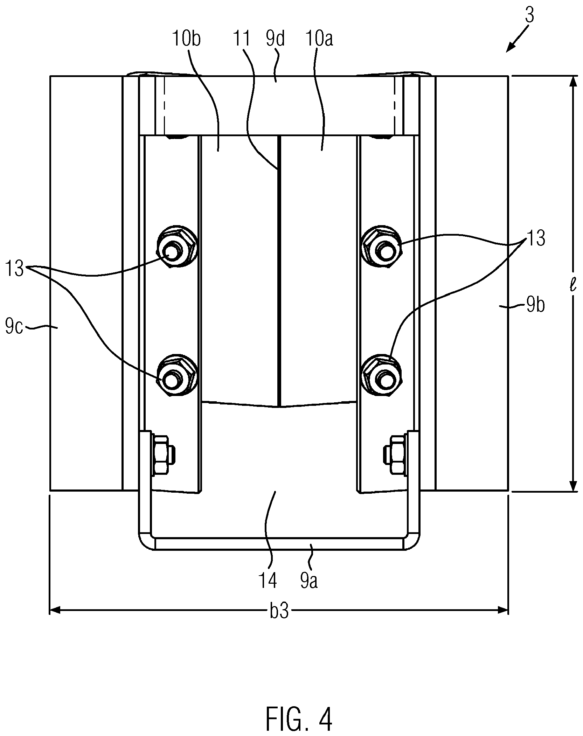

Die Figur 4 zeigt eine Draufsicht auf die Abstreifvorrichtung 2. Eine Länge I kann in einem Bereich von 65 mm bis 75 mm und eine Breite b2 in einem Bereich von 70 mm bis 80mm liegen.

Figuren zeigen 5A bis 5E schematische Darstellungen eines Abstreifvorgangs einer Elektrodenkappe 15 von der Elektrodenkappen-Aufnahme 16 mittels der Abstreifvorrichtung 3. Die Abstreifvorrichtung 3 ist in der seitlichen Schnittansicht aus der Figur 3 dargestellt.

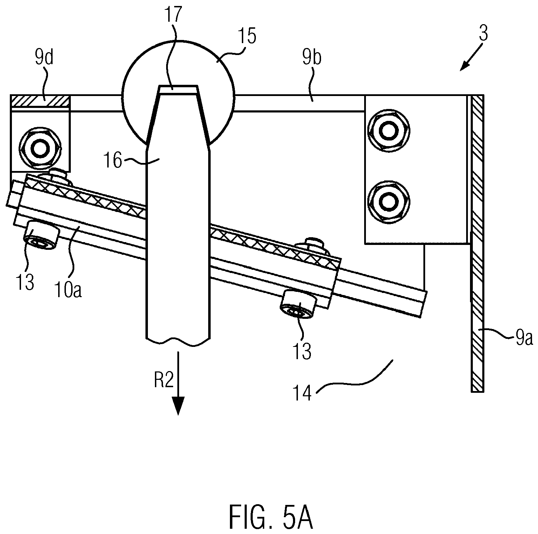

In Figur 5A wird eine Elektrodenkappen-Aufnahme 16 mit einer Elektrodenkappe 15, die von einer (nicht dargestellten) Kappenabdreheinheit nach dem Abdrehen von der Elektrodenkappen-Aufnahme 16 fallengelassen wurde und auf der Elektrodenkappen-Aufnahme 16 verblieb, in die zweite Richtung R2 entlang des Ausbringwegs durch die Abstreifvorrichtung 3 nach unten bewegt. Dass die Elektrodenkappe 15 nicht mehr auf der Elektrodenkappen-Aufnahme 16 fixiert ist, wird durch den freien Bereich 17 zwischen der Elektrodenkappen-Aufnahme 16 und der Elektrodenkappe 15 angedeutet.

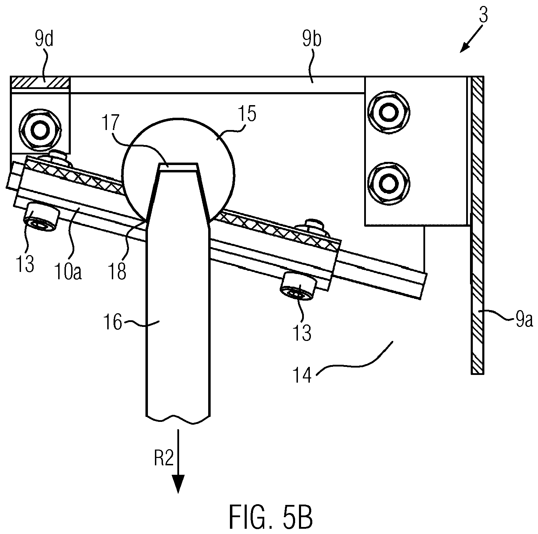

In der Figur 5B ist die Elektrodenkappen-Aufnahme 16 mit der Elektrodenkappe 15 soweit in die zweite Richtung R2 verfahren worden, dass die Elektrodenkappe 15 zumindest teilweise in einem Bereich 18 mit den beiden Lippen 10a (10b nicht dargestellt) in Kontakt kommt und dadurch das Abstreifen der Elektrodenkappe 15 von der Elektrodenkappen-Aufnahme 16 beginnt.

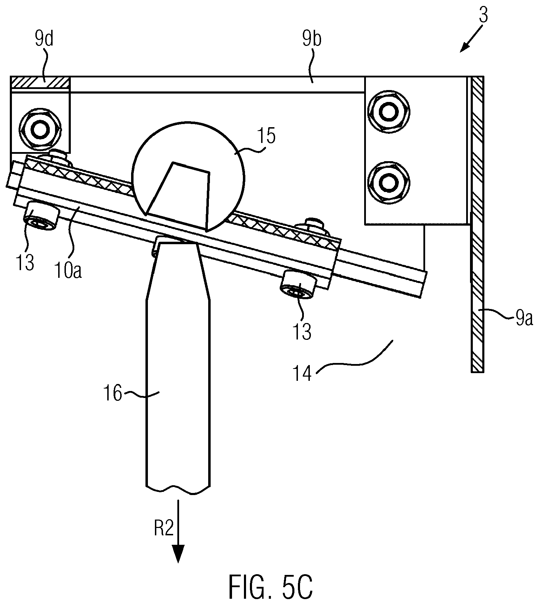

In der Figur 5C ist die Elektrodenkappen-Aufnahme 16 nun noch weiter in die zweite Richtung R2 verfahren worden, so dass die Elektrodenkappe 15 nun ganz von der Elektrodenkappen-Aufnahme 16 durch die beiden Lippen 10a (10b nicht dargestellt) abgestreift wurde. Das Abstreifen ist beendet, und die abgestreifte Elektrodenkappe 16 kann durch die einwirkende Schwerkraft die Schräge der beiden Lippen 10a (10b nicht dargestellt) hinunter rollen in Richtung zu der Öffnung 14, die zwischen den beiden Lippen 10a (10b nicht dargestellt) und der Endwand 9a vorgesehen ist.

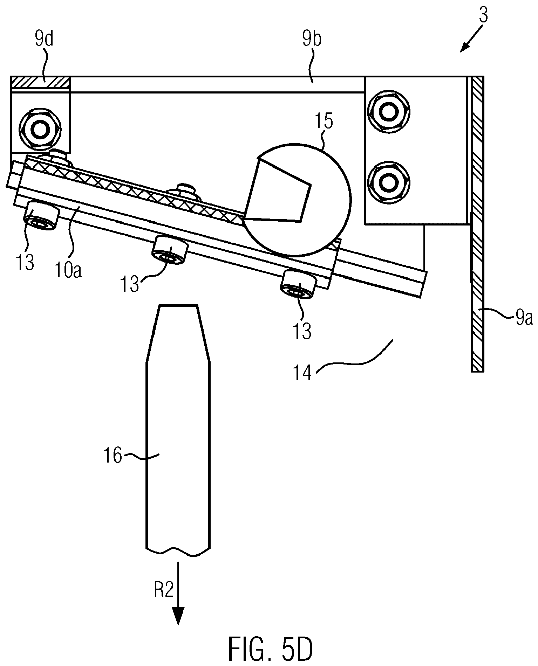

Die Figur 5D zeigt, wie sich die abgestreifte Kappe 15 der Öffnung 14 nähert, in dem sie die Schräge hinunterrollt.

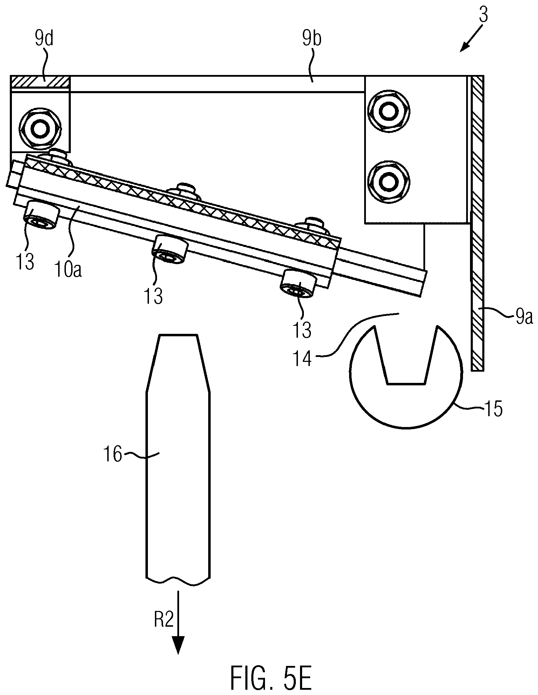

In der Figur 5E ist zu sehen, wie die abgestreifte Kappe 15 durch die Öffnung 14 nach unten fällt. Die Elektrodenkappe 15 kann beispielsweise einem Abfallcontainer zugeleitet werden.

## Patentansprüche

1. Vorrichtung (1) zum Abdrehen und Abstreifen einer Elektrodenkappe (15) von einer Elektrodenkappen-Aufnahme eines Endes einer Schweißzange eines Schweißroboters, wobei die Vorrichtung (1) eine Kappenabdreheinheit (2) umfasst,
**dadurch gekennzeichnet, dass**
die Vorrichtung (1) weiter eine Abstreifvorrichtung (3) umfasst, die entlang eines Einbringwegs für eine Elektrodenkappen-Aufnahme mit einer Elektrodenkappe (15) gesehen vor der Kappenabdreheinheit (2) und entlang eines Ausbringwegs für eine Elektrodenkappen-Aufnahme ohne oder mit Elektrodenkappe (15) gesehen nach der Kappenabdreheinheit (2) angeordnet ist.

2. Die Vorrichtung (1) nach Anspruch 1, wobei die Kappenabdreheinheit (2) vorgesehen und ausgebildet ist, zumindest teilweise an einem Umfangsbereich einer zumindest teilweise in die Kappenabdreheinheit (2) eingebrachte Elektrodenkappe (15) anzugreifen und durch eine spannungskraftschlüssige Drehung in eine erste Drehrichtung (R3) die zumindest teilweise in die Kappenabdreheinheit (2) eingebrachte Elektrodenkappe (15) spannungskraftschlüssig zu greifen, zu halten und abzudrehen und wobei die Abstreifvorrichtung (3) derart angeordnet und ausgebildet ist, dass bei einer zum Abdrehen einer Elektrodenkappe (15) zumindest teilweise in die Kappenabdreheinheit (2) eingebrachte Elektrodenkappe (15) die Abstreifvorrichtung (3) die Elektrodenkappen-Aufnahme mit mindestens einer schräg angeordneten Lippe die Elektrodenkappen-Aufnahme zumindest teilweise umgibt, so dass verhindert wird, dass während die Elektrodenkappen-Aufnahme entlang des Ausbringwegs aus der Kappenabdreheinheit (2) bewegt wird, ein Zurückfallen und Verbleiben der Elektrodenkappe (15) auf der Elektrodenkappen-Aufnahme auftritt, wenn die Elektrodenkappe (15) durch die Kappenabdreheinheit (2) fallengelassen wird.

3. Die Vorrichtung (1) nach Anspruch 1 oder 2, wobei die Abstreifvorrichtung (3) zwei Lippen (10a, 10b) umfasst, die gleichermaßen schräg angeordnet sind, wobei die Elektrodenkappen-Aufnahme mit einer Elektrodenkappe (15) entlang des Einbringwegs zwischen den beiden Lippen (10a, 10b) hindurchbewegbar und die Elektrodenkappen-Aufnahme ohne die Elektrodenkappe (15) entlang des Ausbringwegs zwischen den beiden Lippen (10a, 10b) herausbewegbar ist.

4. Die Vorrichtung (1) nach einem der Ansprüche 1 bis 3, wobei die Abstreifvorrichtung (3) eine Einfassung (9) umfasst, die derart um die mindestens eine Lippe (10a, 10b) angeordnet ist, dass ein Ausleitungsweg für die abgedrehte und fallengelassene Elektrodenkappe (15) ausgebildet ist.

5. Die Vorrichtung (1) nach Anspruch 4, wobei die Einfassung (9) zwei Seitenwände (9b, 9c), einen Querbalken (9d) und eine Endwand (9a) umfasst.

6. Die Vorrichtung (1) nach Anspruch 4 oder 5, wobei die Einfassung (9) im unteren Bereich der mindestens einen Lippe (10a, 10b) eine Öffnung (14) aufweist, durch die die abgedrehte und fallengelassene Elektrodenkappe (15) ausgebringbar ist.

7. Die Vorrichtung (1) nach einem der Ansprüche 1 bis 6, wobei die mindestens eine Lippe (10a, 10b) oder alle Lippen (10a, 10b) als Bürste oder als Gummilippe ausgebildet sind.

8. Die Vorrichtung (1) nach einem der Ansprüche 1 bis 7, wobei ein Steigungswinkel (α) der mindestens einen Lippe (10a, 10b) in einem Bereich von 20° bis 50° liegt.

9. Abstreifvorrichtung (3) zur Verwendung in Kombination mit einer Kappenabdreheinheit (2), wobei die Abstreifvorrichtung (3) mindestens eine schräg angeordnete Lippe (10a, 10b) umfasst.

10. Die Abstreifvorrichtung (3) nach Anspruch 9, umfassend zwei Lippen (10a, 10b), die gleichermaßen schräg angeordnet sind.

11. Die Abstreifvorrichtung (3) nach Anspruch 9 oder 10, weiter umfassend eine Einfassung (9), die derart um die mindestens eine Lippe (10a, 10b) angeordnet ist, dass ein Ausleitungsweg für eine abgedrehte und fallengelassene Elektrodenkappe (15) ausgebildet ist.

12. Die Abstreifvorrichtung (3) nach Anspruch 11, wobei die Einfassung (9) zwei Seitenwände (9b, 9c), einen Querbalken (9d) und eine Endwand (9a) umfasst.

13. Die Abstreifvorrichtung (3) nach Anspruch 11 oder 12, wobei die Einfassung (9) im unteren Bereich der mindestens einen Lippe (10a, 10b) eine Öffnung (14) aufweist, durch die eine abgedrehte und fallengelassene Elektrodenkappe (15) ausgebringbar ist.

14. Die Abstreifvorrichtung (3) nach einem der Ansprüche 9 bis 13, wobei die mindestens eine Lippe (10a, 10b) oder alle Lippen (10a, 10b) als Bürste oder als Gummilippe ausgebildet sind.

15. Die Abstreifvorrichtung (3) nach einem der Ansprüche 9 bis 14, wobei ein Steigungswinkel (α) der mindestens einen Lippe (10a, 10b) in einem Bereich von 20° bis 50° liegt.

## Geänderte Patentansprüche

### Geänderte Patentansprüche gemäss Regel 137(2) EPÜ.

1. Vorrichtung (1) zum Abdrehen einer Elektrodenkappe (15) von einer Elektrodenkappen-Aufnahme eines Endes einer Schweißzange eines Schweißroboters und Abstreifen der abgedrehten Elektrodenkappe (15) von der Elektrodenkappen-Aufnahme des Endes der Schweißzange des Schweißroboters, wobei die Vorrichtung (1) eine Kappenabdreheinheit (2) zum Abdrehen einer Elektrodenkappe (15) von einer Elektrodenkappen-Aufnahme eines Endes einer Schweißzange eines Schweißroboters umfasst,
**dadurch gekennzeichnet, dass**
die Vorrichtung (1) weiter eine Abstreifvorrichtung (3) zum Abstreifen einer nach dem Abdrehen von einer Elektrodenkappen-Aufnahme durch die Kappenabdreheinheit (2) fallengelassene und wieder auf die Elektrodenkappe-Aufnahme zurückgefallene Elektrodenkappe von der Elektrodenkappen-Aufnahme umfasst, wobei die Abstreifvorrichtung (3) unterhalb der Kappenabdreheinheit (2) angeordnet ist.

2. Die Vorrichtung (1) nach Anspruch 1, wobei:
die Kappenabdreheinheit (2) ein Stirnrad (4) mit einer zentralen Öffnung (5) zum Einbringen einer Elektrodenkappen-Aufnahme mit einer Elektrodenkappe in einer ersten Richtung (R1), drei Spannbacken (8), die jeweils mit einer Zugfeder (12) in Richtung auf eine eingebrachte Elektrodenkappe belastet sind, wobei die Zugfedern (12) die Spannbacken (8) gegen eine eigebrachte Elektrodenkappe ziehen bei Drehung des Stirnrads (4) in eine erste Drehrichtung (R3), eine eingebrachte Elektrodenkappe (15) spannungskraftschlüssig greifen, halten und von einer Elektrodenkappen-Aufnahme abdrehen, umfasst und
die Abstreifvorrichtung (3) mindestens eine schräg angeordnete Lippe (10a, 10b) umfasst, die Abstreifvorrichtung (3) zum Abstreifen einer von der Kappenabdreheinheit abgedrehten Elektrodenkappe (15) von einer Elektrodenkappen-Aufnahme eines Endes einer Schweißzange eines Schweißroboters mit der mindestens einen schräg angeordneten Lippe eine Elektrodenkappen-Aufnahme zumindest teilweise umgibt.

3. Die Vorrichtung (1) nach Anspruch 1 oder 2, wobei die Abstreifvorrichtung (3) zwei Lippen (10a, 10b) umfasst, die gleichermaßen schräg angeordnet sind, wobei die Elektrodenkappen-Aufnahme mit einer Elektrodenkappe (15) entlang des Einbringwegs zwischen den beiden Lippen (10a, 10b) hindurchbewegbar und die Elektrodenkappen-Aufnahme ohne die Elektrodenkappe (15) entlang des Ausbringwegs zwischen den beiden Lippen (10a, 10b) herausbewegbar ist.

4. Die Vorrichtung (1) nach einem der Ansprüche 2 bis 3, wobei die Abstreifvorrichtung (3) eine Einfassung (9) umfasst und wobei die mindestens eine Lippe (10a, 10b) an der Einfassung (9) angeordnet ist.

5. Die Vorrichtung (1) nach Anspruch 4, wobei die Einfassung (9) zwei Seitenwände (9b, 9c), einen Querbalken (9d) und eine Endwand (9a) umfasst.

6. Die Vorrichtung (1) nach Anspruch 4 oder 5, wobei die Einfassung (9) im unteren Bereich der mindestens einen Lippe (10a, 10b) eine Öffnung (14) aufweist, durch die die abgedrehte und fallengelassene Elektrodenkappe (15) ausgebringbar ist.

7. Die Vorrichtung (1) nach einem der Ansprüche 1 bis 6, wobei die mindestens eine Lippe (10a, 10b) oder alle Lippen (10a, 10b) als Bürste oder als Gummilippe ausgebildet sind.

8. Die Vorrichtung (1) nach einem der Ansprüche 1 bis 7, wobei ein Steigungswinkel (α) der mindestens einen Lippe (10a, 10b) in einem Bereich von 20° bis 50° liegt.

9. Abstreifvorrichtung (3) zum Abstreifen einer von einer Elektrodenkappen-Aufnahme eines Endes einer Schweißzange eines Schweißroboters abgedrehten Elektrodenkappe (15) zur Verwendung in Kombination mit einer Kappenabdreheinheit (2) zum Abdrehen einer Elektrodenkappe (15) von einer Elektrodenkappen-Aufnahme eines Endes einer Schweißzange eines Schweißroboters, wobei die Abstreifvorrichtung (3) mindestens eine schräg angeordnete Lippe (10a, 10b) umfasst und unterhalb der Kappenabdreheinheit (2) angeordnet ist.

10. Die Abstreifvorrichtung (3) nach Anspruch 9, umfassend zwei Lippen (10a, 10b), die gleichermaßen schräg angeordnet sind.

11. Die Abstreifvorrichtung (3) nach Anspruch 9 oder 10, weiter umfassend eine Einfassung (9) und wobei die mindestens eine Lippe (10a, 10b) an der Einfassung (9) angeordnet ist.

12. Die Abstreifvorrichtung (3) nach Anspruch 11, wobei die Einfassung (9) zwei Seitenwände (9b, 9c), einen Querbalken (9d) und eine Endwand (9a) umfasst.

13. Die Abstreifvorrichtung (3) nach Anspruch 11 oder 12, wobei die Einfassung (9) im unteren Bereich der mindestens einen Lippe (10a, 10b) eine Öffnung (14) aufweist, durch die eine abgedrehte und fallengelassene Elektrodenkappe (15) ausgebringbar ist.

14. Die Abstreifvorrichtung (3) nach einem der Ansprüche 9 bis 13, wobei die mindestens eine Lippe (10a, 10b) oder alle Lippen (10a, 10b) als Bürste oder als Gummilippe ausgebildet sind.

15. Die Abstreifvorrichtung (3) nach einem der Ansprüche 9 bis 14, wobei ein Steigungswinkel (α) der mindestens einen Lippe (10a, 10b) in einem Bereich von 20° bis 50° liegt.
